# EUROPEAN PATENT SPECIFICATION

(11) **EP 3 862 817 B1**
(45) Date of publication and mention of the grant of the patent: **20.03.2024**
(21) Application number: 20204065.5
(22) Date of filing: 27.10.2020
(51) Int. Cl.: G03G 15/04, G03G 21/16

(54) **IMAGE FORMING APPARATUS**
BILDERZEUGUNGSVORRICHTUNG
APPAREIL DE FORMATION D'IMAGES

(30) Priority: 10.02.2020 US 202016785677
(43) Date of publication of application: 11.08.2021
(73) Proprietor: Toshiba TEC Kabushiki Kaisha, Tokyo 141-8562 (JP)
(72) Inventor: Matsushima, Toshihiro, Tokyo 141-8562 (JP)
(74) Representative: Hoffmann Eitle

(56) References cited:
- US-A1- 2003 222 968
- US-A1- 2009 162 091
- US-A1- 2010 054 802
- US-A1- 2013 259 521

## Description

### FIELD

Embodiments described herein relate generally to an image forming apparatus.

### BACKGROUND

In an image forming apparatus such as an electrophotographic apparatus, a technique for exposing a photoconductive drum of an image forming unit by an exposure apparatus having a print head, attaching a developer such as toner to the photoconductive drum, and transferring the developer to a sheet such as paper is known.

When cleaning the print head or replacing the image forming unit, the print head is at a position separated from the image forming unit. When image formation is performed, the print head is in contact with the image forming unit and is at a predetermined position with respect to the image forming unit.

US 2009 0162091 A1 discloses an image forming apparatus including a photosensitive member on which an electrostatic latent image is to be formed; a first body which rotatably supports the photosensitive member; an exposing unit which exposes the photosensitive member; a second body which supports the exposing unit movably between an exposing position in which the exposing unit exposes the photosensitive member and a retracting position in which the exposing unit is retracted from the photosensitive member; a first grounding unit which, when the exposing unit is positioned at the exposing position, causes the exposing unit to be electrically connected to the first body; and a second grounding unit which, when the exposing unit is positioned at the retracting position, causes the exposing unit to be electrically connected to the first body via the second body.

### SUMMARY OF THE INVENTION

One of the objects of the present invention is to improve prior art techniques and overcome at least some of the prior art problems.

The present invention is defined by the appended set of claims.

According to a first aspect of the invention, there is provided an image forming apparatus, comprising: an electrically conductive frame configured to be grounded; an image forming unit; a print head; a holder that supports the print head; an electrically conductive urging member between the print head and the holder that urges the print head toward the image forming unit; and an electrically conductive arm that extends from the urging member and is integrally formed with the urging member, wherein the arm floats when the print head is separated from the image forming unit, and the arm contacts the contact and is electrically connected to the frame when the print head contacts the image forming unit.

The image forming apparatus according to the first aspect of the invention further comprises a base fixed to the frame, wherein the base has a contact that is electrically connected to the frame.

Optionally, in the image forming apparatus according to the first aspect of the invention, the contact has a spring property and is elastically deformed according to a contact force by the arm when the print head contacts the image forming unit.

Optionally, in the image forming apparatus according to the first aspect of the invention, the contact is electrically connected directly to the frame.

Optionally, in the image forming apparatus according to the first aspect of the invention, the contact is electrically connected to the frame via one or more conductive members.

Optionally, in the image forming apparatus according to the first aspect of the invention, the frame includes an electrically conductive front frame configured to be grounded, and an electrically conductive rear frame configured to be grounded that faces the front frame, and the arm is electrically connected to at least one of the front frame and the rear frame when the print head contacts the image forming unit.

Optionally, the image forming apparatus according to the first aspect of the invention further comprises a plurality of image forming units; a plurality of print heads; a plurality of holders, each of the plurality of holders correspondingly support each of the plurality of print heads; a plurality of electrically conductive urging members correspondingly between the plurality of print heads and the plurality of holders; and a plurality of electrically conductive arms, each of the plurality of electrically conductive arms correspondingly connected to each of the plurality of urging members.

Optionally, the image forming apparatus according to the first aspect of the invention further comprises four image forming units; four print heads; four holders, each of the holders correspondingly support each of the print heads; four electrically conductive urging members correspondingly between the four print heads and the four holders; and four electrically conductive arms, each of the four electrically conductive arms correspondingly connected to each of the four urging members.

Optionally, in the image forming apparatus according to the first aspect of the invention, the urging member is a coiled spring.

According to a second aspect of the invention, there is provided a multifunctional peripheral, comprising: an electrically conductive frame configured to be grounded; an image forming unit; a print head; a holder that supports the print head; an electrically conductive urging member between the print head and the holder that urges the print head toward the image forming unit; and an electrically conductive arm that extends from the urging member and is integrally formed with the urging member, wherein the arm floats when the print head is separated from the image forming unit, and the arm contacts the contact and is electrically connected to the frame when the print head contacts the image forming unit.

The multifunctional peripheral according to the second aspect of the invention further comprises a base fixed to the frame, wherein the base has a contact that is electrically connected to the frame.

Optionally, in the multifunctional peripheral according to the second aspect of the invention, the contact has a spring property and is elastically deformed according to a contact force by the arm when the print head contacts the image forming unit.

Optionally, in the multifunctional peripheral according to the second aspect of the invention, the contact is electrically connected directly to the frame.

Optionally, in the multifunctional peripheral according to the second aspect of the invention, the contact is electrically connected to the frame via one or more conductive members.

Optionally, in the multifunctional peripheral according to the second aspect of the invention, the frame includes an electrically conductive and grounded front frame, and an electrically conductive and grounded rear frame that faces the front frame, and the arm is electrically connected to at least one of the front frame and the rear frame when the print head contacts the image forming unit.

Optionally, the multifunctional peripheral according to the second aspect of the invention further comprises a plurality of image forming units; a plurality of print heads; a plurality of holders, each of the plurality of holders correspondingly support each of the plurality of print heads; a plurality of electrically conductive urging members correspondingly between the plurality of print heads and the plurality of holders; and a plurality of electrically conductive arms, each of the plurality of electrically conductive arms correspondingly connected to each of the plurality of urging members.

Optionally, the multifunctional peripheral according to the second aspect of the invention further comprises four image forming units; four print heads; four holders, each of the holders correspondingly support each of the print heads; four electrically conductive urging members correspondingly between the four print heads and the four holders; and four electrically conductive arms, each of the four electrically conductive arms correspondingly connected to each of the four urging members.

Optionally, in the multifunctional peripheral according to the second aspect of the invention, the urging member is a coiled spring.

According to a third aspect of the invention, there is provided a method of operating an image forming apparatus or multifunctional peripheral, comprising: floating an electrically conductive arm connected to an electrically conductive urging member between a print head and a holder that supports the print head when separating the print head from an image forming unit; cleaning the print head; and after cleaning, electrically connecting the arm to an electrically conductive and grounded frame when contacting the print head with the image forming unit.

Optionally, the method according to the third aspect of the invention further comprises forming an image on a medium after contacting the print head with the image forming unit.

### DESCRIPTION OF THE DRAWINGS

FIG. 1 is a perspective view illustrating an image forming apparatus according to an embodiment;
FIG. 2 is a front view illustrating an image forming apparatus according to the embodiment;
FIG. 3 is a perspective view illustrating a frame, a solid head unit, and an image forming unit of the image forming apparatus according to the embodiment;
FIG. 4 is a perspective view illustrating main parts of the frame, the solid head unit, and the image forming unit of an image forming apparatus according to the embodiment;
FIG. 5 is a perspective view illustrating the solid head unit and the image forming unit of the image forming apparatus according to the embodiment;
FIG. 6 is a perspective view illustrating the solid head unit and the image forming unit of the image forming apparatus according to the embodiment;
FIG. 7 is a cross-sectional view illustrating the solid head unit and the image forming unit of the image forming apparatus according to the embodiment;
FIG. 8 is a perspective view illustrating the solid head unit and the image forming unit of the image forming apparatus according to the embodiment;
FIG. 9 is a perspective view illustrating the solid head unit and the image forming unit of the image forming apparatus according to the embodiment;
FIG. 10 is a perspective view illustrating the solid head unit and the image forming unit of the image forming apparatus according to the embodiment;
FIG. 11 is a cross-sectional view illustrating the solid head unit and the image forming unit of the image forming apparatus according to the embodiment;
FIG. 12 is a perspective view illustrating the solid head unit of the image forming apparatus according to the embodiment;
FIG. 13 is a perspective view illustrating the solid head unit of the image forming apparatus according to the embodiment;
FIG. 14 is a perspective view illustrating the solid head unit of the image forming apparatus according to the embodiment;
FIG. 15 is a perspective view illustrating the solid head unit of the image forming apparatus according to the embodiment;
FIG. 16 is a perspective view illustrating an urging member and an arm of the solid head unit of the image forming apparatus according to the embodiment;
FIG. 17 is a block view illustrating ground connection of the frame (front frame), the solid head unit, and the image forming unit of the image forming apparatus according to the embodiment;
FIG. 18 is a block view illustrating a ground connection of the frame (front frame), the solid head unit, and the image forming unit of the image forming apparatus according to the embodiment;
FIG. 19 is a block view illustrating a ground connection of the frame (rear frame), the solid head unit, and the image forming unit of the image forming apparatus according to the embodiment;
FIG. 20 is a block view illustrating a ground connection of the frame (rear frame), the solid head unit, and the image forming unit of the image forming apparatus according to the embodiment;
FIG. 21 is a perspective view illustrating a drum case of the image forming unit of the image forming apparatus according to the embodiment; and
FIG. 22 is a perspective view illustrating the drum case of the image forming unit of the image forming apparatus according to the embodiment.

### DETAILED DESCRIPTION

In general, according to one embodiment, an image forming apparatus according to an aspect includes an electrically conductive and grounded frame, an image forming unit, a print head, a holder that supports the print head, an electrically conductive urging member between the print head and the holder for urging the print head toward the image forming unit, and an electrically conductive arm extending from the urging member and electrically connected to the urging member. The arm floats when the print head moves away from the image forming unit and is electrically connected to the frame when the print head contacts the image forming unit.

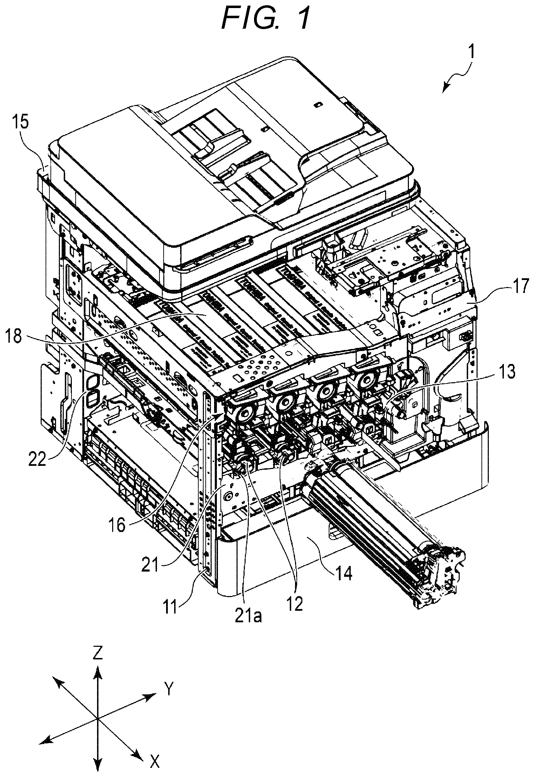

An image forming apparatus 1 according to an embodiment will be described with reference to FIGS. 1 to 22.

In the present embodiment, the image forming apparatus 1 will be described below with the direction along the insertion direction of the image forming unit 13 as an X direction, the direction along the gravity direction as a Z direction, and the direction orthogonal to the X direction and the Z direction as a Y direction. The image forming apparatus 1 will be described with the X direction as the front-rear direction and the side on which the image forming unit 13 is inserted or removed as the front. The X direction is also the axial direction of a photoconductive drum 52 when the image forming unit 13 is disposed in a frame 11 and attached to a solid head unit 12.

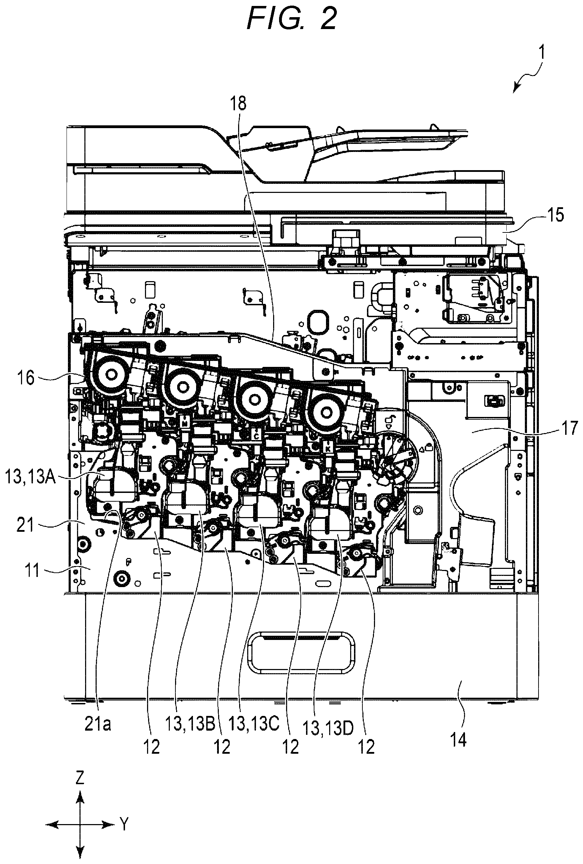

FIG. 1 is a perspective view of the image forming apparatus 1. FIG. 2 is a front view of the image forming apparatus 1. In FIGS. 1 and 2, the decorative board of the image forming apparatus 1 is omitted.

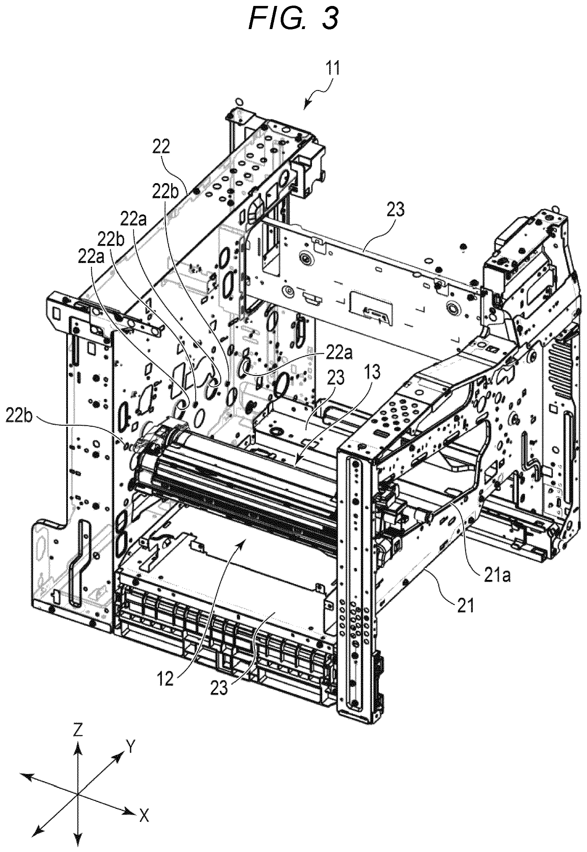

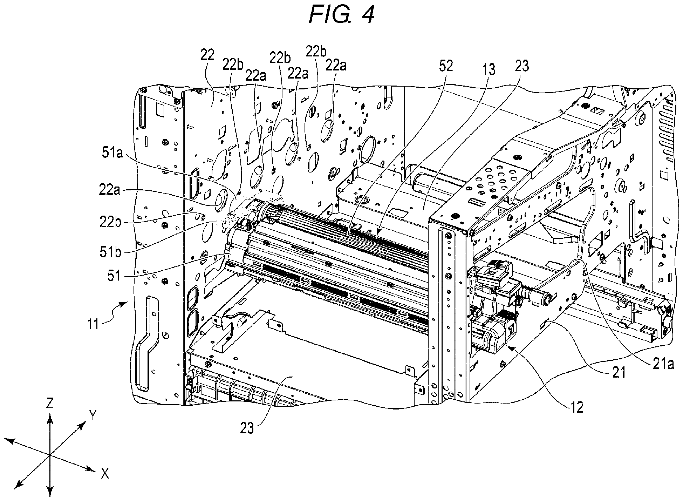

FIGS. 3 and 4 are perspective views illustrating the frame 11, the solid head unit 12, and the image forming unit 13 of the image forming apparatus 1. FIG. 4 illustrates enlarged main parts of the frame 11, the solid head unit 12, and the image forming unit 13. In FIGS. 3 and 4, only one solid head unit 12 and image forming unit 13 are illustrated for convenience of description.

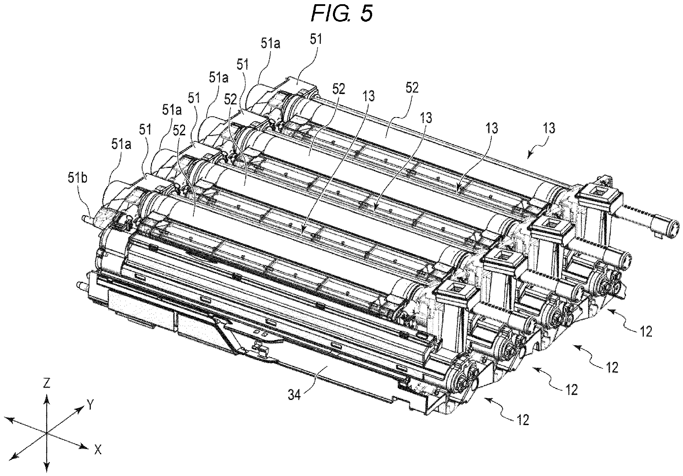

FIG. 5 is a perspective view illustrating four solid head units 12 and four image forming units 13.

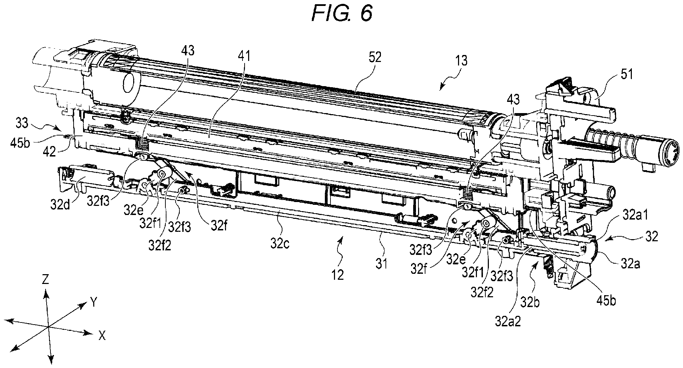

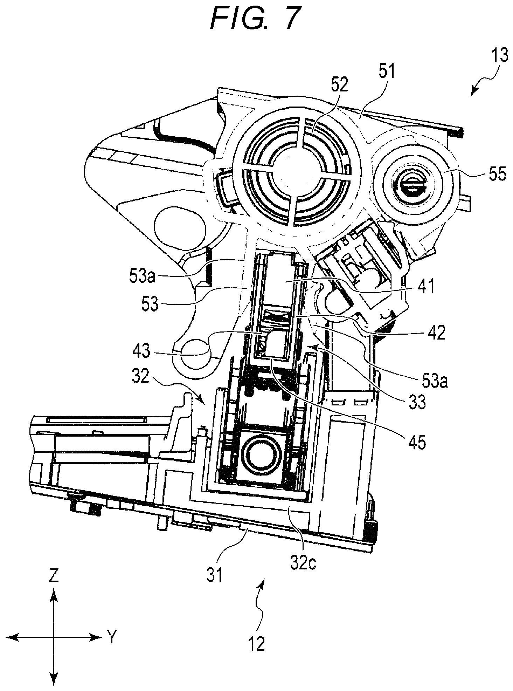

FIGS. 6 and 7 illustrate one solid head unit 12 and one image forming unit 13 in a state where a solid head 33 is in a predetermined position with respect to the image forming unit 13. FIG. 6 is a perspective view. FIG. 7 is a cross-sectional view.

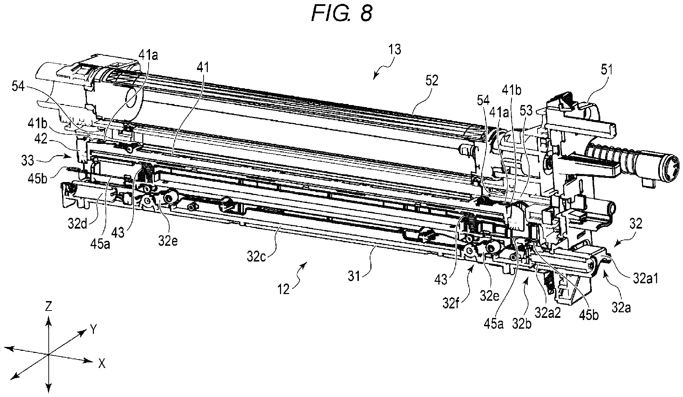

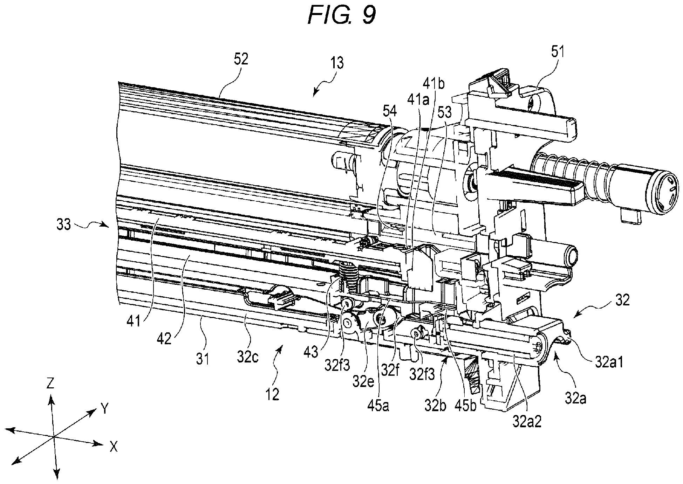

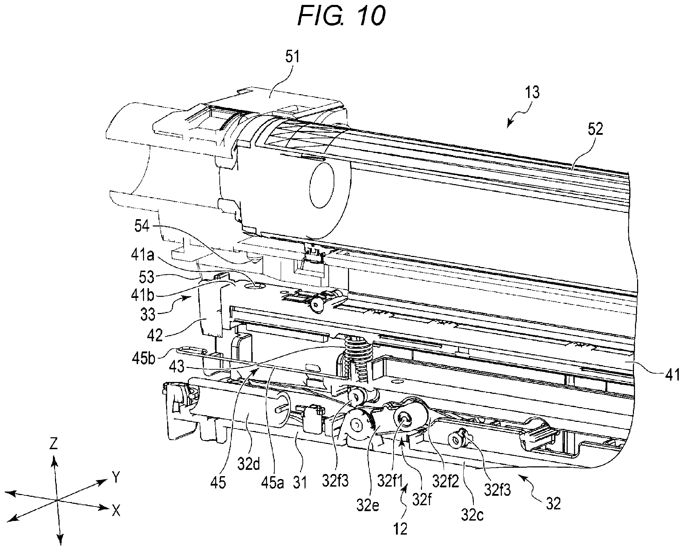

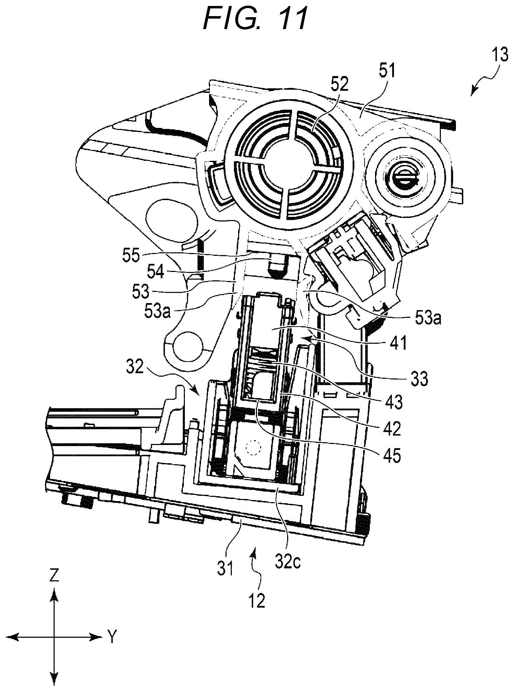

FIGS. 8 to 11 illustrate one solid head unit 12 and one image forming unit 13 in a state where the solid head 33 is located away from the image forming unit 13. FIG. 8 is a perspective view. FIG. 9 is a perspective view illustrating a front frame 21 side of one solid head unit 12 and one image forming unit 13. FIG. 10 is a perspective view illustrating a rear frame 22 side of one solid head unit 12 and one image forming unit 13. FIG. 11 is a cross-sectional view.

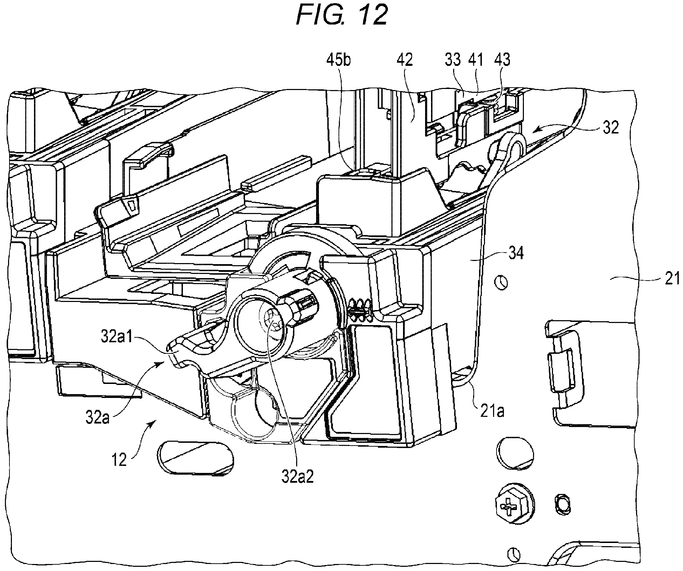

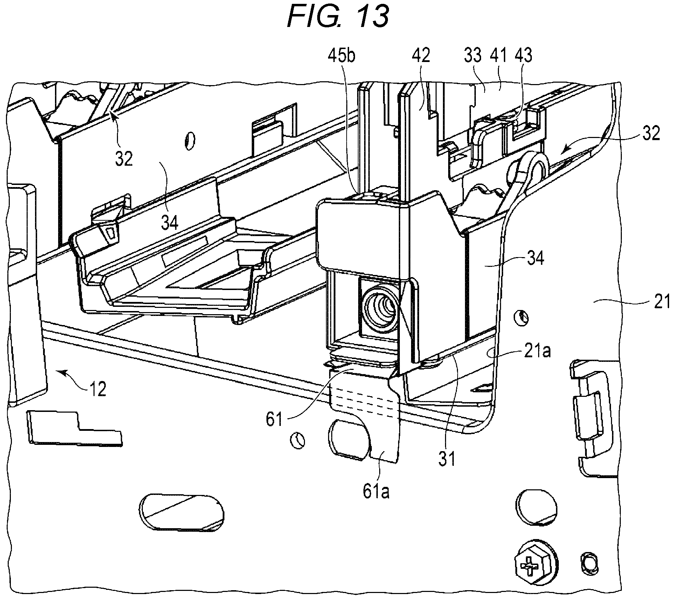

FIGS. 12 and 13 are perspective views illustrating the front frame 21 side of one solid head unit 12. FIG. 13 illustrates a state in which an operation lever 32a (to be described later) of the solid head unit 12 is omitted and a contact (ground metal plate) 61 is in contact with the front frame 21.

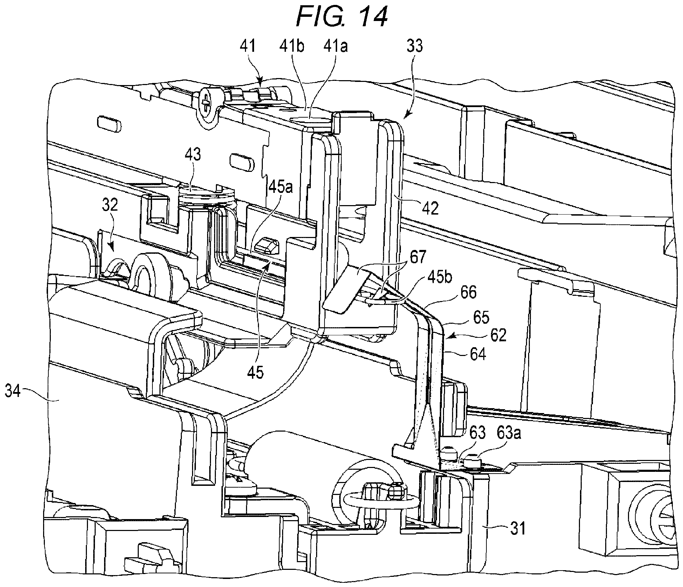

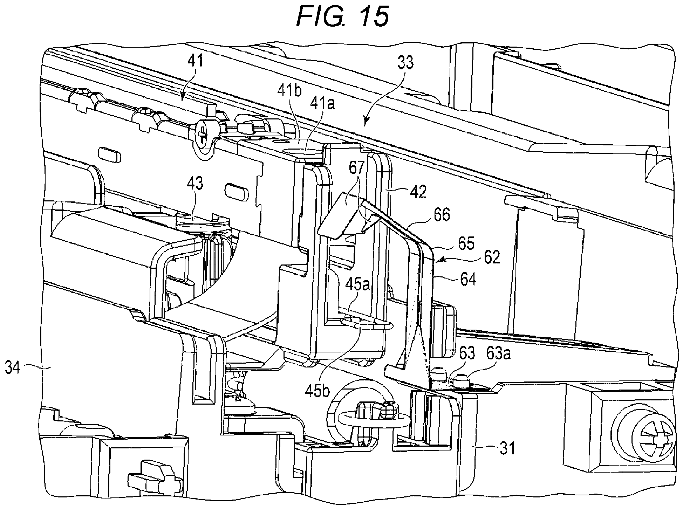

FIGS. 14 and 15 are perspective views illustrating the rear frame 22 side of one solid head unit 12. In FIGS. 14 and 15, the illustration of the image forming unit 13 is omitted. FIG. 14 illustrates a state in which the solid head 33 is in a raised position with respect to a base 31. FIG. 15 illustrates a state in which the solid head 33 is in a lowered position with respect to the base 31.

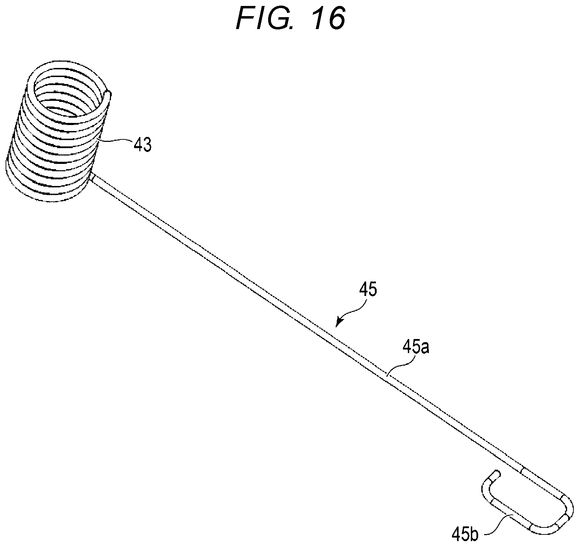

FIG. 16 is a perspective view illustrating an urging member 43 and an arm 45 extending from the urging member 43.

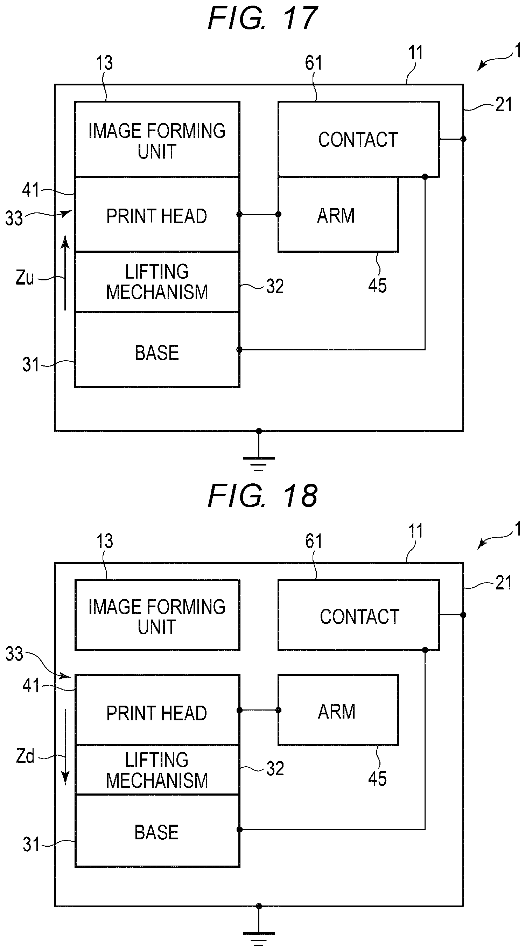

FIGS. 17 and 18 are block views illustrating a ground connection state of a print head 41 of the solid head 33 with respect to the front frame 21 of the frame 11. FIG. 17 illustrates a state in which the solid head 33 is in a predetermined position with respect to the image forming unit 13. In FIG. 17, the print head 41 of the solid head 33 is electrically connected to the front frame 21. FIG. 18 illustrates a state in which the solid head 33 is at a position separated from the image forming unit 13. In FIG. 18, the print head 41 of the solid head 33 descends with respect to the base 31, and the electrical connection to the front frame 21 is released.

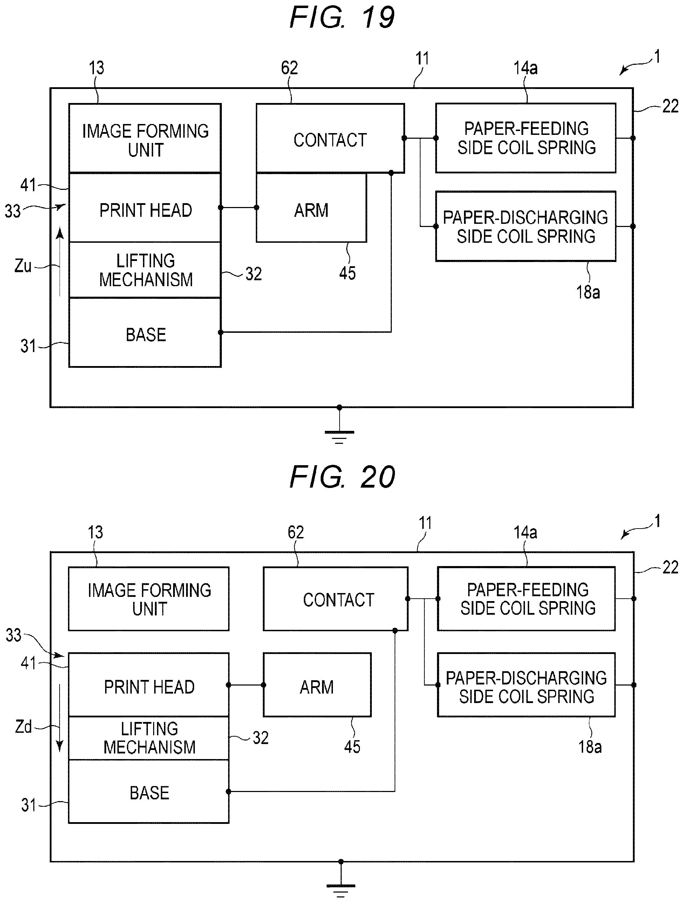

FIGS. 19 and 20 are block views illustrating a ground connection state of the print head 41 of the solid head 33 with respect to the rear frame 22 of the frame 11. FIG. 19 illustrates a state in which the solid head 33 is in a predetermined position with respect to the image forming unit 13. In FIG. 19, the print head 41 of the solid head 33 is electrically connected to the rear frame 22. FIG. 20 illustrates a state in which the solid head 33 is at a position separated from the image forming unit 13. In FIG. 20, the print head 41 of the solid head 33 descends with respect to the base 31, and the electrical connection to the rear frame 22 is released.

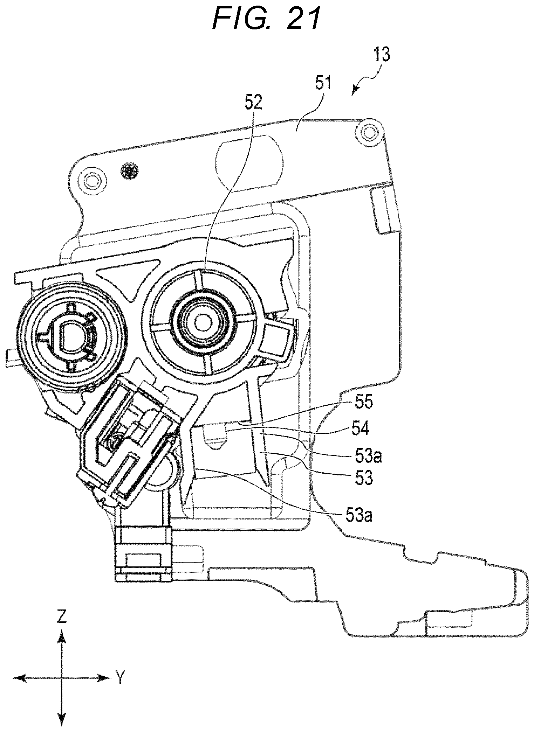

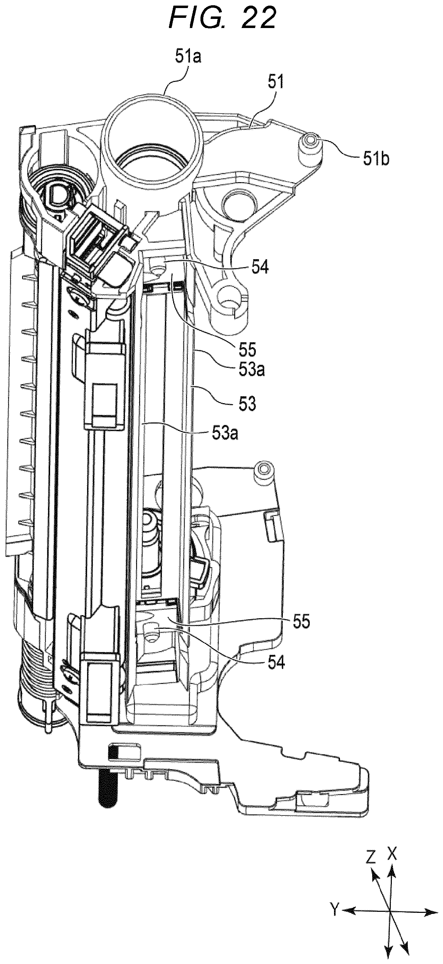

FIG. 21 is a sectional view illustrating the image forming unit 13. FIG. 22 is a perspective view illustrating a drum case 51 of the image forming unit 13.

The image forming apparatus 1 is, for example, a multifunction peripheral (MFP) device that integrates functions such as copying, scanning, and printers. As illustrated in FIGS. 1 and 2, the image forming apparatus 1 includes the frame 11, a plurality of solid head units 12, and a plurality of image forming units 13. The image forming apparatus 1 includes, for example, a paper feeding tray 14, a scanner unit 15, a transfer belt 16, a fixing device 17, a paper discharging tray 18, a transport device, and a control unit.

The number of solid head units 12 and image forming units 13 of the image forming apparatus 1 is set according to the type of developer used in the image forming apparatus 1. In the present embodiment, as an example, toners of four colors of yellow, magenta, cyan, and black are used as developers. As illustrated in FIGS. 1, 2, and 5, in the present embodiment, the image forming apparatus 1 includes four solid head units 12 and four image forming units 13.

As illustrated in FIGS. 1 to 4, the frame 11 supports each component of the image forming apparatus 1. A decorative plate (not illustrated) is provided on the outer surface side of the frame 11. That is, the image forming apparatus 1 has a decorative board on the outer surface side.

The frame 11 includes the front frame 21, the rear frame 22, and a plurality of connection frames 23. The front frame 21, the rear frame 22, and the plurality of connection frames 23 are formed of, for example, a stainless steel material and are electrically connected to each other. When any one of the front frame 21, the rear frame 22, and the plurality of connection frames 23 is grounded, the front frame 21, the rear frame 22, and the plurality of connection frames 23 of the frame 11 are grounded.

As illustrated in FIGS. 3 and 4, the front frame 21 and the rear frame 22 face each other in the X direction, which is the direction in which the image forming unit 13 of the image forming apparatus 1 is inserted. The front frame 21 and the rear frame 22 are integrally fixed by a plurality of connection frames 23 that are separated from each other in the Y direction and extend in the X direction. Four solid head units 12 and four image forming units 13 are fixed to the front frame 21 and the rear frame 22.

The front frame 21 has an insertion port 21a into which the four image forming units 13 are inserted from the front frame 21 side toward the rear frame 22 along the X direction. The insertion port 21a is an opening formed in the front frame 21. The insertion port 21a has a shape in which the four image forming units 13 can be inserted with the ends of the four solid head units 12 exposed to the outside. The insertion port 21a exposes an operation lever 32a (described later) of the solid head unit 12 and the image forming unit 13 to the outside.

The rear frame 22 has a plurality of support holes 22a and a plurality of guide holes 22b. The number of support holes 22a and the number of guide holes 22b is the same as the number of the image forming units 13, and in the present embodiment, there are four each. Each support hole 22a and each guide hole 22b are formed in a region facing the insertion port 21a formed in the front frame 21 of the rear frame 22 in the X direction. The support hole 22a supports the tip side of the image forming unit 13 in the insertion direction of the image forming unit 13. The support hole 22a is a circular hole formed in the rear frame 22. The guide hole 22b guides a posture around one axis about the axis along the insertion direction of the image forming unit 13 supported by the support hole 22a. The guide hole 22b is a circular hole formed in the rear frame 22.

As illustrated in FIGS. 5 to 11, the solid head unit 12 includes the base 31, a lifting mechanism 32, the solid head 33, and a first guide 34. The solid head unit 12 is formed long in one direction. The solid head unit 12 is fixed to the frame 11 with the longitudinal direction along the X direction.

The base 31 has a plate shape whose longitudinal direction is along the X direction. The base 31 supports a part of the lifting mechanism 32.

The lifting mechanism 32 reciprocates the solid head 33 in one direction with respect to the base 31. Hereinafter, the reciprocation of the solid head 33 in one direction with respect to the base 31 will be described as moving up and down. As illustrated in FIGS. 6 to 11, the lifting mechanism 32 uses a Scott Russell link mechanism. The lifting mechanism 32 includes, for example, the operation lever 32a, a conversion mechanism 32b, a slider 32c, an urging member 32d, a support member 32e, and a link 32f.

When the operation lever 32a is operated, the operation lever 32a can rotate within a predetermined angle range around an axis in the X direction. As illustrated in FIGS. 6, 8, and 9, the operation lever 32a includes an operation portion 32a1 that is rotated by an operator and a shaft portion 32a2 in the operation portion 32a1.

When the operation portion 32a1 is operated, the conversion mechanism 32b rotates the shaft portion 32a2 around the axis in the X direction and moves the shaft portion 32a2 in the axial direction. In the posture in which the solid head unit 12 is fixed to the frame 11, the axial direction of the shaft portion 32a2 is along the X direction.

The slider 32c is supported by the base 31 so as to be movable in the X direction. The shaft portion 32a2 is fixed to one end side of the slider 32c in the X direction. The urging member 32d is connected to the other end side of the slider 32c in the X direction. The slider 32c operates the link 32f in the X direction when moved along the X direction. The slider 32c rotatably supports one end of the link 32f.

One end of the urging member 32d is supported by the base 31. The other end of the urging member 32d is supported by the slider 32c. The urging member 32d is a coil spring. The urging member 32d urges the slider 32c in one direction. The urging member 32d urges the slider 32c in the direction away from the operation lever 32a along the X direction.

One end of the support member 32e is rotatably supported by the base 31. The other end of the support member 32e rotatably supports a first shaft 32f1 (described later) of the link 32f. For example, there are two support members 32e.

The links 32f are spaced apart in the X direction at two locations of the lifting mechanism 32. As illustrated in FIGS. 6 and 8 to 10, the link 32f includes the first shaft 32f1 rotatably supported by the support member 32e, a link body 32f2 provided at an end of the first shaft 32f1 in the axial direction, and a pair of second shafts 32f3 provided at both ends of the link body 32f2.

The link body 32f2 is a plate-like or bar-like member that is long in one direction. The link body 32f2 has the first shaft 32f1 at the center in the longitudinal direction. Each of the link bodies 32f2 has the second shaft 32f3 at both ends in the longitudinal direction. The pair of second shafts 32f3 protrude from the main surfaces at both ends of the link body 32f2 in the same direction as the first shaft 32f1. As illustrated in FIGS. 9 and 10, the pair of second shafts 32f3 are rotatably supported by the long hole on the side surface of the slider 32c and the long hole on the side surface of the solid head 33, respectively.

In the link 32f, when the slider 32c moves in the X direction and one of the second shafts 32f3 supported by the slider 32c moves in the X direction, a force in the X direction is applied to the end of the link body 32f2 on the slider 32c side. The slider 32c moves only in the X direction, and the other second shaft 32f3 of the link body 32f2 is supported by the solid head 33. The first shaft 32f1 at the center of the link body 32f2 in the longitudinal direction presses the support member 32e. The support member 32e rotates with respect to the base 31 around one end of the support member 32e. At this time, the link body 32f2 rotates around the first shaft 32f1. The link body 32f2 changes in angle with respect to the X direction. The second shaft 32f3 supported by the solid head 33 moves up and down. Thus, in the link 32f, when the slider 32c moves in the X direction, the link body 32f2 and the support member 32e move, and the second shaft 32f3 on the solid head 33 side moves up and down. Therefore, the lifting mechanism 32 moves the solid head 33 up and down in the Z direction with respect to the base 31.

The solid head 33 is an exposure apparatus. The solid head 33 constitutes a light source for writing that forms an electrostatic latent image on the image forming unit 13. As illustrated in FIGS. 6 to 15, the solid head 33 includes the print head 41, a holder 42, and the urging member 43. The solid head 33 is raised and lowered with respect to the base 31 by the lifting mechanism 32. When the solid head 33 is raised with respect to the base 31 and is positioned at a predetermined position with respect to the image forming unit 13, a part of the print head 41 or the holder 42 is in contact with a part of the image forming unit 13.

The print head 41 has a shape that is long in one direction. The print head 41 is, for example, an LED print head that uses an LED that emits light as a light source. The print head 41 is disposed in a predetermined positional relationship in the axial direction of the photoconductive drum 52 and the radial direction of the photoconductive drum 52 with respect to the photoconductive drum 52 (described later) of the image forming unit 13 when the image forming unit 13 is exposed. As illustrated in FIGS. 8 to 10, 14 and 15, the print head 41 has guide openings 41a formed at both ends in the longitudinal direction and at the tip of the solid head 33 in the ascending direction. The print head 41 has contact surfaces 41b that are in contact with a part of the image forming unit 13, for example, at both ends where the openings 41a are formed. The opening 41a is a circular or elliptical hole formed in the contact surface 41b.

The holder 42 supports both ends of the print head 41 in the longitudinal direction. As illustrated in FIGS. 6 and 8, the holder 42 supports the lower surface side of the print head 41 opposite to the side facing the photoconductive drum 52 in the ascending/descending direction of the solid head 33.

The urging member 43 is located between the lower surface of the print head 41 opposite to the side facing the photoconductive drum 52 and the holder 42. That is, the urging member 43 is located between the print head 41 and the holder 42 in the ascending/descending direction of the print head 41. The urging member 43 urges the print head 41 in a direction away from the holder 42 toward the photoconductive drum 52 side. A plurality of urging members 43 are provided. As illustrated in FIGS. 6 and 8, the urging member 43 is provided at two positions on both ends of the print head 41 in the longitudinal direction. The urging member 43 has a coil spring. The urging member 43 is formed of an electrically conductive metal material such as a stainless-steel material. The urging member 43 is electrically connected to an electrically conductive part such as a substrate of the print head 41. If the holder 42 has conductivity, it is also preferable that the print head 41 is electrically connected to the urging member 43 via the holder 42.

As illustrated in FIG. 16, the urging member 43 is integrally formed with the arm 45 extending from the lower end of the urging member 43 in the X direction. That is, the arm 45 is integrally formed of the same material as the urging member 43. The arm 45 has a spring property that bends in the ascending/descending direction. The arm 45 includes an arm main body 45a extending from the lower end of the urging member 43, and a wound portion (contact) 45b that is formed integrally with the arm body 45a and wound around the distal end separated from the urging member 43 in the XY plane.

The arm 45 of one urging member 43 protrudes toward the front frame 21 with respect to the holder 42. The arm 45 of the other urging member 43 protrudes toward the rear frame 22 with respect to the holder 42. The two urging members 43 move together with the holder 42 as the lifting mechanism 32 moves the solid head 33 relative to the base 31 in the Z direction.

The first guide 34 illustrated in FIG. 5 is fixed to at least one of the frame 11 or the base 31. The first guide 34 guides the moving direction of the image forming unit 13 along the X direction when the image forming unit 13 is inserted from the insertion port 21a of the front frame 21 and when the image forming unit 13 moves on the solid head unit 12 in the X direction after being inserted from the insertion port 21a. The first guide 34 is, for example, a rail that guides the image forming unit 13 by making contact with a part of the image forming unit 13 when the image forming unit 13 is inserted from the insertion port 21a.

As illustrated in FIGS. 12 and 13, an electrically conductive contact (ground metal plate) 61 is fixed to the holder 42. As illustrated in FIGS. 14 and 15, an electrically conductive contact (ground metal plate) 62 is fixed to the base 31. The contacts 61 and 62 are made of, for example, a stainless-steel material.

As illustrated in FIGS. 13, 17, and 18, as an example, the contact 61 on the front frame 21 side directly contacts the front frame 21. For this reason, the contact 61 on the front frame 21 side is electrically connected to the front frame 21 and grounded.

The contact 61 on the front frame 21 side illustrated in FIG. 13 is formed by cutting and bending an electrically conductive metal plate. The contact 61 has a tab 61a extending on the lower side of the holder 42. The tab 61a contacts the front surface of the front frame 21 due to the spring property. In the contact 61, the shape of the contact portion with the wound portion 45b of the arm 45 of the urging member 43 is, as an example, formed in the same shape as a base portion 64, a bent portion 65, an inclined portion 66, and a contact portion 67, which will be described later, of the contact 62 illustrated in FIGS. 14 and 15.

As illustrated in FIG. 13, when the contact 61 contacts the front frame 21, as illustrated in FIG. 12, the contact 61 is not visible when the solid head unit 12 is placed at a predetermined position.

When the solid head 33 is pulled out from the frame 11, the contact 61 moves from the front frame 21 to the front side. For this reason, when the solid head 33 is pulled out from the frame 11, it is possible to prevent the contact 61 from being loaded.

As illustrated in FIGS. 14 and 15, the contact 62 on the rear frame 22 side is formed by cutting and bending an electrically conductive metal plate. The contact 62 has a base portion 63 that is fixed to the base 31 with a screw 63a. The contact 62 includes an extension portion 64 extending upward along the Z axis from the base portion 63, the bent portion 65 bent in the Y-axis direction from the extension portion 64, the inclined portion 66 that intersects the XY plane from the bent portion 65 and faces upward in the Z direction, and the contact portion 67 at the distal end of the inclined portion 66 and bent downward in the Z direction with respect to the inclined portion 66. The wound portion 45b of the arm 45 is disposed below the Z direction near the boundary between the inclined portion 66 and the contact portion 67. The bent portion 65 is elastically deformed by receiving the gravity of the contact portion 67 and the inclined portion 66 and the force from the wound portion 45b of the arm 45.

As illustrated in FIGS. 19 and 20, the contact 62 indirectly contacts the rear frame 22. For example, the contact 62 on the rear frame 22 side electrically contacts the rear frame 22 via an electrically conductive paper-feeding side coil spring 14a of the paper feeding tray 14 and/or an electrically conductive paper-discharging side coil spring 18a of the paper discharge tray 18. For this reason, the contact 62 on the rear frame 22 side is electrically connected to the rear frame 22 indirectly and grounded.

The base portion 63 of the contact 62 is electrically connected to the electrically conductive paper-feeding side coil spring 14a via the contact 62 itself or an electrically conductive intermediate such as a conducting wire. The paper-feeding side coil spring 14a is located between the paper feeding tray 14 and the rear frame 22. The paper-feeding side coil spring 14a contacts the rear frame 22. For this reason, the contact 62 is indirectly electrically connected to the rear frame 22 via the conductive paper-feeding side coil spring 14a.

The base portion 63 of the contact 62 is electrically connected to the electrically conductive paper-discharging side coil spring 18a via the contact 62 itself or an electrically conductive intermediate such as a conducting wire. The paper-discharging side coil spring 18a is located between the paper discharging tray 18 and the rear frame 22. The paper-discharging side coil spring 18a contacts the rear frame 22. For this reason, the contact 62 is electrically connected to the rear frame 22 indirectly via the electrically conductive paper-discharging side coil spring 18a.

It is preferable that the contact 62 is electrically connected to both the paper-feeding side coil spring 14a and the paper-discharging side coil spring 18a. The contact 62 may be electrically connected to the paper-feeding side coil spring 14a or the paper-discharging side coil spring 18a. In addition, the contact 62 may be directly electrically connected to the rear frame 22. For this reason, the contact 62 is electrically connected to the frame 11 via one or a plurality of conductive members.

The image forming unit 13 is, for example, an electrophotographic process unit (EPU). In the present embodiment, for example, as illustrated in FIG. 2, an image forming unit 13A that stores a yellow toner, an image forming unit 13B that stores a magenta toner, an image forming unit 13C that stores a cyan toner, and an image forming unit 13D that stores a black toner are sequentially disposed from the primary side to the secondary side in the transport direction of sheets.

As illustrated in FIGS. 6 to 11, 21, and 22, the image forming unit 13 includes the drum case 51, the photoconductive drum 52, a second guide 53, a protrusion 54, and a contact surface 55. The image forming unit 13 includes, for example, a developing roller, a charging unit, a toner tank, and a cleaner case.

The drum case 51 supports the photoconductive drum 52 in a rotatable manner. As illustrated in FIGS. 4 and 22, the drum case 51 includes a supported portion 51a that is inserted into the support hole 22a of the rear frame 22, and a guide portion 51b that is inserted into the guide hole 22b of the rear frame 22 at one end in the longitudinal direction. The drum case 51 contacts the pair of rails 34a of the first guide 34 when the image forming unit 13 is inserted from the insertion port 21a, and guides the movement of the image forming unit 13 in the X direction.

The supported portion 51a is formed in a cylindrical shape, for example. The outer diameter of the supported portion 51a is set to be slightly smaller than the inner diameter of the support hole 22a.

The guide portion 51b is formed in a columnar shape, for example. The outer diameter of the guide portion 51b is set to be slightly smaller than the inner diameter of the guide hole 22b, for example. The guide portion 51b is inserted into the guide hole 22b, thereby guiding the posture of the drum case 51 in the rotation direction about the central axis of the supported portion 51a of the drum case 51.

The photoconductive drum 52 can form a uniform charge on the surface and is formed so that an electrostatic latent image can be formed on the surface when the surface is exposed. The photoconductive drum 52 is formed so that the toner attached to the electrostatic latent image can be transferred to paper.

The second guide 53 is formed integrally with the drum case 51, for example. For example, the second guide 53 is formed integrally with the drum case 51 or assembled integrally with the drum case 51.

When the image forming unit 13 is inserted into the insertion port 21a, if the second guide 53 contacts the solid head 33, the second guide 53 guides the position in the direction orthogonal to the insertion direction of the image forming unit 13 and the ascending direction of the solid head 33 with respect to the image forming unit 13 of the solid head 33. When the solid head 33 of the solid head unit 12 rises toward the photoconductive drum 52, the second guide 53 guides the movement of the solid head 33 so that the solid head 33 is in a predetermined position with respect to the photoconductive drum 52.

For example, the second guide 53 makes contact with the holder 42 of the solid head 33 to guide the solid head 33 to rise. As a specific example, the second guide 53 has a pair of plate-like portions 53a extending in a direction along the axial direction of the photoconductive drum 52. In the pair of plate-like portions 53a, the width on the photoconductive drum 52 side is set to a uniform width that is the same as the width of the solid head 33 in the direction orthogonal to the longitudinal direction and the ascending direction or slightly large enough to guide the solid head 33 to a predetermined position of the photoconductive drum 52. In the pair of plate-like portions 53a, the width of the tip portion gradually decreases from the tip toward the photoconductive drum 52 side. As a specific example, the tip portions of the pair of plate-like portions 53a are flat surfaces inclined with respect to the ascending direction of the solid head 33 so that the width gradually decreases from the tip toward the photoconductive drum 52 side, or formed by curved surfaces whose tangent lines are inclined with respect to the ascending direction. Here, the width of the pair of plate-like portions 53a is the width of a gap formed between the opposing surfaces of the pair of plate-like portions 53a.

That is, as illustrated in FIG. 21, the width of the pair of plate-like portions 53a is a gap larger than the width of the solid head 33 in the direction orthogonal to the longitudinal direction and the ascending direction up to the midway portion, from the tip toward the photoconductive drum 52 side, and is gradually decreased and is set to a uniform width substantially the same as the width of the solid head 33 from the midway portion.

As illustrated in FIG. 11, when the image forming unit 13 is inserted through the insertion port 21a, the tips of the pair of plate-like portions 53a overlap at least the tip of the holder 42 of the solid head 33 in the direction orthogonal to the longitudinal direction and the ascending/descending direction of the solid head 33. In other words, when the image forming unit 13 is inserted through the insertion port 21a, the tips of the pair of plate-like portions 53a are opposed to at least the tip of the holder 42 of the solid head 33 that is descending toward the base 31 side in the ascending direction of the solid head 33, in a direction orthogonal to the longitudinal direction and the ascending direction of the solid head 33.

The protrusion 54 is a so-called dowel. The protrusion 54 is a protrusion provided on the drum case 51, for example. The protrusion 54 is formed in a columnar shape, for example. The protrusions 54 are adjacent to both ends of the second guide 53 in the axial direction of the photoconductive drum 52. The protrusion 54 is inserted into the opening 41a provided in the print head 41. The protrusion 54 is inserted into the opening 41a, thereby positioning the longitudinal position of the photoconductive drum 52 supported by the drum case 51 with respect to the solid head 33. The protrusion 54 is inserted into the opening 41a, thereby restricting the movement of the drum case 51 in the X direction and fixing the image forming unit 13 to the frame 11 and the solid head unit 12.

The contact surface 55 supports the protrusion 54. The contact surface 55 contacts the contact surface 41b of the print head 41 in a state where the protrusion 54 is inserted into the opening 41a. Therefore, when the print head 41 contacts the image forming unit 13 and is in a predetermined position with respect to the image forming unit 13, the contact surfaces 41b and 55 contact.

The developing roller supplies toner from the toner tank to the surface of the photoconductive drum 52. The charging unit forms a uniform charge on the surface of the photoconductive drum 52. The toner tank stores toner. The cleaner case collects excess toner when the toner adheres to the photoconductive drum 52.

The paper feeding tray 14 stores sheets such as paper and film for printing and transports the sheets to a transport device. The paper feeding tray 14 is disposed below the frame 11, for example, below the plurality of solid head units 12 and the plurality of image forming units 13. The paper feeding tray 14 includes a pickup roller and takes out a corresponding sheet according to image forming processing. The taken paper sheet is transported to the image forming unit 13 and the transfer belt 16 by a transport device or the like.

The scanner unit 15 reads a placed document or the like. The scanner unit 15 includes, for example, a manual feeding tray 15a.

The transfer belt 16 transfers the toner attached to the electrostatic latent image on the photoconductive drum 52 onto a paper sheet passing through the photoconductive drum 52. The fixing device 17 fixes the toner on the paper sheet onto which the toner has been transferred.

The paper discharging tray 18 receives the discharged paper sheet on which the toner is fixed. The transport device transports the paper sheet from the paper feeding tray 14 to the paper discharging tray 18. For example, the transport device includes a plurality of rollers provided in the frame 11 and a driving device that rotates the rollers. In FIGS. 1 and 2, the paper discharging tray 18 is illustrated without a decorative board.

The control unit controls each component and performs image forming processing. The image forming processing, for example, includes charging processing for controlling the charging unit to form a uniform charge on the photoconductive drum 52 of the image forming unit 13, exposure processing for forming an electrostatic latent image by controlling the solid head unit 12 on the photoconductive drum 52, a development process for attaching toner to the electrostatic latent image on the photoconductive drum 52, transfer processing for transferring the toner attached to the electrostatic latent image to the sheet passing through the photoconductive drum 52 by the transfer belt 16 or the like, and fixing processing for fixing the toner on the sheet to which the toner has been transferred by the fixing device 17.

Next, the ground connection state of the print head 41 when performing image formation with the image forming apparatus 1 configured as described above and when performing maintenance on the image forming apparatus 1 will be described. Here, one urging member 43 is assumed to be close to the front frame 21. The other urging member 43 is assumed to be close to the rear frame 22.

In a state where the vertical positions of the base 31 and the image forming unit 13 are fixed, the solid head 33 between the base 31 and the image forming unit 13 is moved up and down by the lifting mechanism 32 within a predetermined movable range. The movable range of the lifting mechanism 32 is larger than the maximum distance between the print head 41 and the image forming unit 13.

When image formation is performed by the image forming apparatus 1, as illustrated in FIGS. 6 and 7, the solid head 33 is in contact with a part of the image forming unit 13 and is in a predetermined position. At this time, the contact surfaces 41b at both ends of the print head 41 of the solid head 33 contact the contact surfaces 55 at both ends of the image forming unit 13. As illustrated in FIG. 14, the solid head 33 of the image forming apparatus 1 is in a position raised with respect to the base 31 by the lifting mechanism 32.

The urging member 43 presses the print head 41 toward the image forming unit 13. The urging member 43 adjusts the contact load between the print head 41 and a part of the image forming unit 13 while the print head 41 is in contact with a part of the image forming unit 13.

As illustrated in FIGS. 14 and 19, the arm 45 of the other urging member 43 protrudes from the other end of the holder 42 of the solid head 33 toward the rear frame 22 and contacts the contact 62 fixed to the base 31. The contact 62 is electrically connected to the rear frame 22 by the paper-feeding side coil spring 14a and/or the paper-discharging side coil spring 18a. In other words, the urging member 43 indirectly electrically connects the print head 41 that contacts the urging member 43 and the rear frame 22 that contacts the contact 62 via the paper-feeding side coil spring 14a and/or the paper-discharging side coil spring 18a. Accordingly, the print head 41 is grounded.

As illustrated in FIGS. 12 and 17, the arm 45 of one urging member 43 protrudes from one end of the holder 42 of the solid head 33 toward the front frame 21 and contacts the contact 61 fixed to the holder 42. The contact 61 is electrically connected to the front frame 21. That is, the urging member 43 electrically connects the print head 41 that contacts the urging member 43 and the front frame 21 that contacts the contact 61. Accordingly, the print head 41 is grounded.

When performing maintenance on the image forming apparatus 1, the solid head 33 is separated from the image forming unit 13. During maintenance of the image forming apparatus 1, the solid head 33 is lowered with respect to the base 31 by the lifting mechanism 32. As illustrated in FIGS. 15, 18 and 20, when the solid head 33 of the image forming apparatus 1 is lowered with respect to the base 31 by the lifting mechanism 32, as illustrated in FIGS. 8 to 11, the solid head 33 is located away from the image forming unit 13.

As illustrated by an arrow Zd in FIG. 20, the arm 45 of the other urging member 43 of the solid head 33 descends as the holder 42 and the print head 41 descend. The arm 45 of the other urging member 43 releases the state in contact with the contact 62. That is, the other urging member 43 releases the electrical connection between the print head 41 that contacts the other urging member 43 and the rear frame 22 that indirectly contacts the contact 62. Therefore, the other urging member 43 releases the state in which the print head 41 is grounded.

At this time, in particular, as illustrated in FIG. 15, the wound portion 45b of the arm 45 of the other urging member 43 does not contact any component of the image forming apparatus 1 and floats. Therefore, when the solid head 33 is lowered with respect to the base 31 by the lifting mechanism 32 and the ground connection to the print head 41 is released, the load is prevented from being applied to the wound portion 45b of the arm 45 of the other urging member 43.

As illustrated by the arrow Zd in FIG. 18, the arm 45 of the other urging member 43 of the solid head 33 descends as the holder 42 and the print head 41 descend. The arm 45 of one urging member 43 releases the state in contact with the contact 61. That is, one urging member 43 releases the electrical connection between the print head 41 that contacts the one urging member 43 and the front frame 21 that contacts the contact 61. Accordingly, one urging member 43 releases the state in which the print head 41 is grounded.

At this time, in particular, the wound portion 45b of the arm 45 of one urging member 43 does not contact any component of the image forming apparatus 1 and floats like the wound portion 45b of the arm 45 of the other urging member 43. Therefore, when the solid head 33 is lowered with respect to the base 31 by the lifting mechanism 32 and the ground connection to the print head 41 is released, the load is prevented from being applied to the wound portion 45b of the arm 45 of one urging member 43.

After the maintenance of the image forming apparatus 1, when the image forming apparatus 1 performs image formation, the lifting mechanism 32 raises the solid head 33 relative to the base 31. When the solid head 33 is raised with respect to the base 31 by the lifting mechanism 32 from the state illustrated in FIGS. 8 and 15 to the state illustrated in FIGS. 6 and 14, the solid head 33 contacts a part of the image forming unit 13.

As illustrated by an arrow Zu in FIG. 19, the arm 45 of the other urging member 43 of the solid head 33 rises from the state illustrated in FIG. 15 to the state illustrated in FIG. 14 as the holder 42 and the print head 41 rise. As illustrated in FIG. 14, the arm 45 of the other urging member 43 contacts the contact 62 while the print head 41 is raised toward the image forming unit 13 by the lifting mechanism 32. The arm 45 of the other urging member 43 contacts the contact 62 from below and urges the contact 62 upward. For this reason, the contact 62 having spring property is elastically deformed according to the contact force by the arm 45. When the print head 41 is further raised toward the image forming unit 13 by the lifting mechanism 32, the inclined portion 66 and the contact portion 67 of the contact 62 urge the wound portion 45b of the arm 45 downward due to the spring property. Therefore, when the print head 41 is further raised toward the image forming unit 13 by the lifting mechanism 32, the arm 45 is elastically deformed and the contact 62 is elastically deformed. When the arm 45 is raised, the inclination angle of the inclined portion 66 of the contact 62 changes according to the position of the arm 45. For this reason, the wound portion 45b of the arm 45 and the contact 62 are in contact with each other in a state where the forces are balanced.

The vertical movement range of the arm 45 of the other urging member 43 and the contact position between the arm 45 of the other urging member 43 and the contact 62 on the rear frame 22 side change up and down within a range of allowed variation for each machine. Due to the spring property of the contact 62 on the rear frame 22 side, the contact 62 secures the amount of biting in the upward direction in the Z direction when the arm 45 of the other urging member 43 contacts the contact 62 by the overstrike. Therefore, the print head 41 is electrically connected to the rear frame 22 even if the contact position between the contact 62 on the rear frame 22 side and the arm 45 of the other urging member 43 varies. Due to the spring property of the arm 45 of the other urging member 43, the arm 45 of the other urging member 43 secures the amount of upward movement in the Z direction when the contact 62 on the rear frame 22 side contacts the arm 45 by the overstrike. Therefore, the print head 41 is electrically connected to the rear frame 22 even if the contact position between the contact 62 on the rear frame 22 side and the arm 45 of the other urging member 43 varies. Therefore, when the image forming apparatus 1 according to the present embodiment raises the solid head 33 with respect to the base 31 by the lifting mechanism 32, the print head 41 is securely grounded.

As described above, the shape of the contact portion of the contact 61 with the wound portion 45b of the arm 45 of the urging member 43 is the same as that of the base 64, the bent portion 65, the inclined portion 66, and the contact portion 67 of the contact 62 illustrated in FIGS. 14 and 15. Therefore, the print head 41 is electrically connected to the front frame 21 even if the contact position between the contact 61 on the front frame 21 side and the arm 45 of one urging member 43 varies. Therefore, when the image forming apparatus 1 according to the present embodiment raises the solid head 33 with respect to the base 31 by the lifting mechanism 32, the print head 41 is securely grounded.

In this manner, the arm 45 of the other urging member 43 contacts the contact 62 when the contact surface 41b of the print head 41 is in a contact position where the contact surface 41b of the print head 41 contacts the contact surface 55 of the image forming unit 13. The arm 45 of the other urging member 43 is separated from the contact 62 and is not in contact with the contact surface 41b of the print head 41 when the contact surface 41b is separated from the contact surface 55 of the image forming unit 13. When the arm 45 of the other urging member 43 is separated from the contact 62, the arm 45 does not contact any position and floats. For this reason, it is possible to prevent a load from being applied to the arm 45 of the other urging member 43 when the print head 41 is in the separated position away from the image forming unit 13.

Similarly, the arm 45 of one urging member 43 contacts the contact 61 when the contact surface 41b of the print head 41 is in a contact position where the contact surface 41b of the print head 41 contacts the contact surface 55 of the image forming unit 13. The arm 45 of one urging member 43 is separated from the contact 61 and is not in contact with the contact surface 41b of the print head 41 when the contact surface 41b is separated from the contact surface 55 of the image forming unit 13. When the arm 45 of one urging member 43 is separated from the contact 61, the arm 45 does not contact any position and floats. For this reason, it is possible to prevent a load from being applied to the arm 45 of one urging member 43 when the print head 41 is in the separated position away from the image forming unit 13.

According to the image forming apparatus 1 according to the embodiment, when the print head 41 that performs image formation in the image forming apparatus 1 is energized, the print head 41 can be securely connected to the ground via a component that electrically connects the print head 41 and the frame 11. According to the image forming apparatus 1 according to the embodiment, when the print head 41 that performs maintenance on the image forming apparatus 1 is deenergized, a component that electrically connects the print head 41 and the frame 11 can float to prevent a load from being generated on the component.

The embodiment is not limited to the examples described above. For example, in the above-described head 41 and the frame 11 can float to prevent a load from being generated on the component.

The embodiment is not limited to the examples described above. For example, in the above-described example, as a configuration for moving the solid head 33 up and down relative to the image forming unit 13, the configuration using the slider 32c that moves linearly by the rotation of the operation lever 32a and the link 32f that rotates by the movement of the slider 32c to raise and lower the solid head 33 has been described, but the present invention is not limited thereto.

In the example described above, the configuration in which the image forming unit 13 is disposed above the solid head unit 12 has been described, but the present invention is not limited thereto. For example, the image forming unit 13 may be disposed below the solid head unit 12.

Although an example in which the print head 41 of the solid head 33 has the opening 41a and the protrusion 54 inserted into the opening 41a is in the drum case 51 has been described, the present invention is not limited thereto. For example, the opening 41a may be in the holder 42 of the solid head 33. The opening 41a may be in the image forming unit 13 and the protrusion 54 may be in the solid head 33.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the scope of the inventions as defined by the appended claims.

## Claims

1. An image forming apparatus (1) or a multifunctional peripheral, comprising:
an electrically conductive frame (11) configured to be grounded;
a base (31) fixed to the frame (11) and having a contact (61, 62) that is electrically connected to the frame (11),
an image forming unit (13);
a print head (41);
a holder (42) that supports the print head (41);
an electrically conductive urging member (43) between the print head (41) and the holder (42) that urges the print head (41) toward the image forming unit (13); and
an electrically conductive arm (45) that extends from the urging member (43) and is integrally formed with the urging member (43),
wherein the arm (45) floats when the print head (41) is separated from the image forming unit (13), and the arm (45) contacts the contact (61, 62) and is electrically connected to the frame (11) when the print head (41) contacts the image forming unit (13).

2. The image forming apparatus (1) or multifunctional peripheral according to claim 1,
wherein the contact (61, 62) has a spring property and is elastically deformed according to a contact force by the arm (45) when the print head (41) contacts the image forming unit (13), and
wherein, preferably, the contact (61, 62) is electrically connected directly to the frame (11), or the contact (61, 62) is electrically connected to the frame (11) via one or more conductive members.

3. The image forming apparatus (1) or multifunctional peripheral according to claim 1 or 2,
wherein the frame (11) includes an electrically conductive front frame (21) configured to be grounded, and an electrically conductive rear frame (22) configured to be grounded that faces the front frame (21), and
the arm (45) is electrically connected to at least one of the front frame (21) and the rear frame (22) when the print head (41) contacts the image forming unit (13).

4. The image forming apparatus (1) or multifunctional peripheral according to any one of claims 1 to 3, further comprising:
a plurality of image forming units (13);
a plurality of print heads (41);
a plurality of holders (42), each of the plurality of holders (42) correspondingly support each of the plurality of print heads (41);
a plurality of electrically conductive urging members (43) correspondingly between the plurality of print heads (41) and the plurality of holders (42); and
a plurality of electrically conductive arms (45), each of the plurality of electrically conductive arms (45) correspondingly connected to each of the plurality of urging members (43).

5. The image forming apparatus (1) or multifunctional peripheral according to any one of claims 1 to 4, further comprising:
four image forming units (13);
four print heads (41);
four holders (42), each of the holders (42) correspondingly support each of the print heads (41);
four electrically conductive urging members (43) correspondingly between the four print heads (41) and the four holders (42); and
four electrically conductive arms (45), each of the four electrically conductive arms (45) correspondingly connected to each of the four urging members (43).

6. The image forming apparatus (1) or multifunctional peripheral according to any one of claims 1 to 5,
wherein the urging member (43) is a coiled spring.

7. A method of operating an image forming apparatus (1) or multifunctional peripheral, comprising:
floating an electrically conductive arm (45) connected to an electrically conductive urging member (43) between a print head (41) and a holder (42) that supports the print head (41) when separating the print head (41) from an image forming unit (13);
cleaning the print head (41); and
after cleaning, electrically connecting the arm (45) to an electrically conductive and grounded frame (11) when contacting the print head (41) with the image forming unit (13) .

8. The method according to claim 7, further comprising:
forming an image on a medium after contacting the print head (41) with the image forming unit (13).

## Patentansprüche

1. Bilderzeugungsvorrichtung (1) oder ein multifunktionales Peripheriegerät, umfassend:
einen elektrisch leitenden Rahmen (11), der dazu konfiguriert ist, geerdet zu sein;
eine Basis (31), die an dem Rahmen (11) befestigt ist und einen Kontakt (61, 62) aufweist, der elektrisch mit dem Rahmen (11) verbunden ist,
eine Bilderzeugungseinheit (13);
einen Druckkopf (41);
einen Halter (42), der den Druckkopf (41) trägt;
ein elektrisch leitendes Druckelement (43) zwischen dem Druckkopf (41) und dem Halter (42), das den Druckkopf (41) in Richtung der Bilderzeugungseinheit (13) drückt; und
einen elektrisch leitenden Arm (45), der sich von dem Druckelement (43) erstreckt und einstückig mit dem Druckelement (43) gebildet ist,
wobei der Arm (45) schwebt, wenn der Druckkopf (41) von der Bilderzeugungseinheit (13) getrennt ist, und der Arm (45) den Kontakt (61, 62) kontaktiert und elektrisch mit dem Rahmen (11) verbunden ist, wenn der Druckkopf (41) die Bilderzeugungseinheit (13) kontaktiert.

2. Bilderzeugungsvorrichtung (1) oder multifunktionales Peripheriegerät nach Anspruch 1,
wobei der Kontakt (61, 62) eine Federeigenschaft aufweist und entsprechend einer Kontaktkraft durch den Arm (45) elastisch verformt wird, wenn der Druckkopf (41) die Bilderzeugungseinheit (13) kontaktiert, und
wobei vorzugsweise der Kontakt (61, 62) direkt mit dem Rahmen (11) elektrisch verbunden ist oder der Kontakt (61, 62) über ein oder mehrere leitende Elemente mit dem Rahmen (11) elektrisch verbunden ist.

3. Bilderzeugungsvorrichtung (1) oder multifunktionales Peripheriegerät nach Anspruch 1 oder 2,
wobei der Rahmen (11) einen elektrisch leitenden vorderen Rahmen (21), der dazu konfiguriert ist, geerdet zu sein, und einen elektrisch leitenden hinteren Rahmen (22), der dazu konfiguriert ist, geerdet zu sein, der dem vorderen Rahmen (21) gegenüberliegt, einschließt, und
der Arm (45) elektrisch mit mindestens einem von dem vorderen Rahmen (21) und dem hinteren Rahmen (22) verbunden ist, wenn der Druckkopf (41) die Bilderzeugungseinheit (13) kontaktiert.

4. Bilderzeugungsvorrichtung (1) oder multifunktionales Peripheriegerät nach einem der Ansprüche 1 bis 3, weiter umfassend:
eine Vielzahl von Bilderzeugungseinheiten (13);
eine Vielzahl von Druckköpfen (41);
eine Vielzahl von Haltern (42), wobei jeder aus der Vielzahl von Haltern (42) jeden aus der Vielzahl von Druckköpfen (41) entsprechend trägt;
eine Vielzahl von elektrisch leitenden Druckelementen (43), die sich entsprechend zwischen der Vielzahl von Druckköpfen (41) und der Vielzahl von Haltern (42) befinden; und
eine Vielzahl von elektrisch leitenden Armen (45), wobei jeder der Vielzahl von elektrisch leitenden Armen (45) entsprechend mit jedem der Vielzahl von Druckelementen (43) verbunden ist.

5. Bilderzeugungsvorrichtung (1) oder multifunktionales Peripheriegerät nach einem der Ansprüche 1 bis 4, weiter umfassend:
vier Bilderzeugungseinheiten (13);
vier Druckköpfe (41);
vier Halter (42), wobei jeder der Halter (42) jeden der Druckköpfe (41) entsprechend trägt;
vier elektrisch leitende Druckelemente (43), die sich entsprechend zwischen den vier Druckköpfen (41) und den vier Haltern (42) befinden; und
vier elektrisch leitende Arme (45), wobei jeder der vier elektrisch leitenden Arme (45) entsprechend mit jedem der vier Druckelemente (43) verbunden ist.

6. Bilderzeugungsvorrichtung (1) oder multifunktionales Peripheriegerät nach einem der Ansprüche 1 bis 5,
wobei das Druckelement (43) eine Schraubenfeder ist.

7. Verfahren zum Betreiben einer Bilderzeugungsvorrichtung (1) oder eines multifunktionalen Peripheriegeräts, umfassend:
Schweben eines elektrisch leitenden Arms (45), der mit einem elektrisch leitenden Druckelement (43) verbunden ist, zwischen einem Druckkopf (41) und einem Halter (42), der den Druckkopf (41) trägt, wenn der Druckkopf (41) von einer Bilderzeugungseinheit (13) getrennt wird;
Reinigen des Druckkopfes (41); und
nach dem Reinigen, elektrisches Verbinden des Arms (45) mit einem elektrisch leitenden und geerdeten Rahmen (11), wenn der Druckkopf (41) die Bilderzeugungseinheit (13) kontaktiert.

8. Verfahren nach Anspruch 7, weiter umfassend:
Erzeugen eines Bildes auf einem Medium, nachdem der Druckkopf (41) die Bilderzeugungseinheit (13) kontaktiert hat.

## Revendications

1. Appareil de formation d'images (1) ou périphérique multifonctionnel, comprenant :
un cadre (11) électroconducteur conçu pour être mis à la terre ;
une base (31) fixée sur le cadre (11) et présentant un contact (61, 62) qui est électriquement connecté au cadre (11),
une unité de formation d'images (13) ;
une tête d'impression (41) ;
un support (42) qui supporte la tête d'impression (41) ;
un élément de sollicitation électroconducteur (43) entre la tête d'impression (41) et le support (42) qui sollicite la tête d'impression (41) vers l'unité de formation d'images (13) ; et
un bras électroconducteur (45) qui s'étend à partir de l'élément de sollicitation (43) et est formé d'une seule pièce avec l'élément de sollicitation (43),
dans lequel le bras (45) flotte lorsque la tête d'impression (41) est séparée de l'unité de formation d'images (13) et le bras (45) est en contact avec le contact (61, 62) et est électriquement connecté au cadre (11) lorsque la tête d'impression (41) est en contact avec l'unité de formation d'images (13).

2. Appareil de formation d'images (1) ou périphérique multifonctionnel selon la revendication 1,
dans lequel le contact (61, 62) présente une propriété de ressort et est élastiquement déformé selon une force de contact par le bras (45) lorsque la tête d'impression (41) est en contact avec l'unité de formation d'images (13) et
dans lequel, de préférence, le contact (61, 62) est électriquement connecté directement au cadre (11) ou le contact (61, 62) est électriquement connecté au cadre (11) par l'intermédiaire d'un ou plusieurs éléments conducteurs.

3. Appareil de formation d'images (1) ou périphérique multifonctionnel selon la revendication 1 ou la revendication 2,
dans lequel le cadre (11) inclut un cadre avant électroconducteur (21) conçu pour être mis à la terre et un cadre arrière électroconducteur (22) conçu pour être mis à la terre qui fait face au cadre avant (21) et
le bras (45) est électriquement connecté à au moins l'un parmi le cadre avant (21) et le cadre arrière (22) lorsque la tête d'impression (41) est en contact avec l'unité de formation d'images (13).

4. Appareil de formation d'images (1) ou périphérique multifonctionnel selon l'une quelconque des revendications 1 à 3, comprenant en outre :
une pluralité d'unités de formation d'images (13) ;
une pluralité de têtes d'impression (41) ;
une pluralité de supports (42), chacun de la pluralité de supports (42) supporte de manière correspondante chacune de la pluralité de têtes d'impression (41) ;
une pluralité d'éléments de sollicitation électroconducteurs (43) de manière correspondante entre la pluralité de têtes d'impression (41) et la pluralité de supports (42) ; et
une pluralité de bras électroconducteurs (45), chacun de la pluralité de bras électroconducteurs (45) connectés de manière correspondante à chacun de la pluralité d'éléments de sollicitation (43).

5. Appareil de formation d'images (1) ou périphérique multifonctionnel selon l'une quelconque des revendications 1 à 4, comprenant en outre :
quatre unités de formation d'images (13) ;
quatre têtes d'impression (41) ;
quatre supports (42), chacun des supports (42) supporte de manière correspondante chacune des têtes d'impression (41) ;
quatre éléments de sollicitation électroconducteurs (43) de manière correspondante entre les quatre têtes d'impression (41) et les quatre supports (42) ; et
quatre bras électroconducteurs (45), chacun des quatre bras électroconducteurs (45) connectés de manière correspondante à chacun des quatre éléments de sollicitation (43).

6. Appareil de formation d'images (1) ou périphérique multifonctionnel selon l'une quelconque des revendications 1 à 5,
dans lequel l'élément de sollicitation (43) est un ressort hélicoïdal.

7. Procédé pour faire fonctionner un appareil de formation d'images (1) ou un périphérique multifonctionnel, comprenant :
le flottement d'un bras électroconducteur (45) connecté à un élément de sollicitation électroconducteur (43) entre une tête d'impression (41) et un support (42) qui supporte la tête d'impression (41) lors de la séparation de la tête d'impression (41) d'une unité de formation d'images (13) ;
le nettoyage de la tête d'impression (41) ; et
après le nettoyage, la connexion électrique du bras (45) à un cadre électroconducteur (11) et mis à la terre lors du contact de la tête d'impression (41) avec l'unité de formation d'images (13).

8. Procédé selon la revendication 7, comprenant en outre :
la formation d'une image sur un support après la mise en contact de la tête d'impression (41) avec l'unité de formation d'images (13).
